# FASCICULE DE BREVET EUROPEEN

(11) **EP 3 541 600 B1**
(45) Date de publication et mention de la délivrance du brevet: **20.04.2022**
(21) Numéro de dépôt: 17808104.8
(22) Date de dépôt: 13.11.2017
(51) Int. Cl.: B29C 53/68

(54) **MACHINE ET PROCÉDÉ POUR LA POSE SIMULTANÉE ET EN HÉLICE DE CÂBLES SUR LA SURFACE EXTERNE D'UN ÉLÉMENT UNITAIRE DE CONDUITE DE TRANSPORT DE FLUIDES**
MASCHINE UND VERFAHREN ZUM GLEICHZEITIGEN VERLEGEN VON KABELN IN EINER SPIRALE AUF DER ÄUSSEREN OBERFLÄCHE EINES EINHEITENELEMENTS EINES FLÜSSIGKEITSTRANSPORTKANALS
MACHINE AND METHOD FOR SIMULTANEOUSLY LAYING CABLES IN A HELIX ON THE OUTER SURFACE OF A UNIT ELEMENT OF A FLUID TRANSPORT DUCT

(30) Priorité: 16.11.2016 FR 1661077
(43) Date de publication de la demande: 25.09.2019
(73) Titulaire: Saipem SA, 78180 Montigny-le-Bretonneux (FR)
(72) Inventeur: PIONETTI, François-Régis, 50450 La Baleine (FR); AGOUMI, Jalil, 94270 Le Kremlin-Bicetre (FR); SUNDERMANN, Axel, 91640 Fontenay-les-Briis (FR)
(74) Mandataire: Cabinet Beau de Loménie
(86) Numéro de dépôt international: PCT/FR2017/053099
(87) Numéro de publication internationale: WO 2018/091814

(56) Documents cités:
- EP-A1- 0 491 353
- US-A1- 2004 099 268
- US-A1- 2005 039 843
- US-A1- 2015 300 539

## Description

### Arrière-plan de l'invention

La présente invention se rapporte au domaine général des conduites de transport de fluides pour le transfert d'hydrocarbures, par exemple de pétrole et de gaz, issus de puits de production sous-marins.

Elle concerne plus précisément une machine permettant de déposer en hélice (on parle également de « spiralage ») plusieurs câbles (par exemple des câbles électriques de chauffage) de façon simultanée sur la surface extérieure de telles conduites.

Il existe différents types de conduites sous-marines utilisées pour le transport de fluides d'hydrocarbures, à simple ou double enveloppe. L'invention s'intéresse plus particulièrement aux conduites à double enveloppe de type « Pipe In Pipe » ou PIP, c'est-à-dire « conduite dans une conduite », dans laquelle une enveloppe interne en acier transporte les fluides et un une enveloppe externe en acier coaxiale à la précédente est en contact avec le milieu ambiant, c'est-à-dire avec l'eau.

Généralement, les conduites à double enveloppe sont assemblées à terre en éléments de longueur unitaire (on parle d'éléments unitaires de conduite ou de rames), de l'ordre de 10 à 100m selon la capacité de tenue en charge du système de pose. Ces d'éléments unitaires de conduite sont alors transportés en mer sur un navire de pose. Lors de la pose, ils sont raccordés les uns aux autres à bord du navire et au fur et à mesure de leur pose en mer.

Par ailleurs, il est connu de chauffer les conduites à double enveloppe sur toute leur longueur grâce à une pluralité de câbles électriques qui sont enroulés autour de la surface externe de l'enveloppe interne des conduites pour la chauffer par effet Joule. Cette solution de chauffage, qui est appelée « chauffage tracé » (ou « heat tracing » en anglais), permet de maintenir les fluides d'hydrocarbures transportés dans les conduites sous-marines à une température supérieure à un seuil critique sur tout leur trajet depuis le puits de production jusqu'à l'installation de surface, et ainsi d'éviter la formation de cristaux d'hydrates ou autres dépôts solides conduisant à la création de bouchons capables de bloquer la conduite sous-marine.

Typiquement, les câbles électriques de chauffage sont des câbles plats qui sont munis d'une protection en caoutchouc et qui sont déposés en hélice sur la surface externe de l'enveloppe interne de chaque élément unitaire de conduite. En pratique, cette pose s'effectue généralement de façon individuelle pour chaque élément unitaire de conduite en déroulant depuis une station fixe les différents câbles électriques, l'enveloppe interne de l'élément unitaire de conduite étant déplacée longitudinalement au travers de la station fixe. A cet effet, l'enveloppe interne de l'élément unitaire de conduite est positionnée sur un support qui la déplace longitudinalement au travers de la station fixe tout en lui faisant subir une rotation autour de son axe de symétrie pour permettre aux câbles de se déposer sur la surface externe de l'enveloppe interne avec un mouvement hélicoïdal.

Ce type de pose en hélice de câbles par l'intermédiaire d'une station fixe au travers de laquelle translate l'élément unitaire de conduite présente cependant un certain nombre d'inconvénients. En effet, du fait du mouvement d'avance de l'enveloppe interne de l'élément unitaire de conduite qui est à la fois longitudinal et rotatif, les câbles sont nécessairement déposés sur la surface externe de l'enveloppe interne avec un mouvement de torsion. Or, cette contrainte de torsion induite sur les câbles au cours de leur pose est susceptible de créer des boucles dans les câbles une fois ces derniers déposés. De plus, l'accumulation de torsion résiduelle peut aboutir à la formation de nœuds endommageant les câbles et les décollant de la surface externe de l'enveloppe interne de la conduite. Par ailleurs, ce type de pose en hélice nécessite un déplacement de la conduite interne de l'élément unitaire de conduite qui requiert un mécanisme relativement complexe - et donc coûteux - à élaborer. US 2015/300539 décrit une machine pour la fabrication d'une conduite en matériau composite permettant une pose en hélice de bandes de tissu sur un tube.

### Objet et résumé de l'invention

La présente invention a donc pour but principal de proposer une machine pour la pose en hélice de câbles qui ne présente pas les inconvénients précités.

Conformément à l'invention, ce but est atteint grâce à une machine pour la pose simultanée et en hélice de câbles sur la surface externe d'un élément unitaire de conduite de transport de fluides, comprenant :
un cadre rotatif destiné à être centré autour d'un axe de symétrie de l'élément unitaire de conduite, le cadre supportant une pluralité d'éléments de bobinage destinés à recevoir des câbles à poser sur l'élément unitaire de conduite, les éléments de bobinage étant situés chacun dans un plan sensiblement longitudinal à l'élément unitaire de conduite et espacés les uns des autres autour de l'axe de symétrie de l'élément unitaire de conduite ;
des moyens pour régler l'inclinaison de chaque élément de bobinage par rapport au plan longitudinal dans lequel il se situe ;
un moteur pas à pas de déplacement linéaire pour déplacer le cadre le long de l'élément unitaire de conduite ; et
un moteur pas à pas de déplacement rotatif pour faire pivoter le cadre autour de l'axe de symétrie de l'élément unitaire de conduite.

L'invention propose ainsi de poser simultanément plusieurs câbles en hélice à partir d'une machine qui se déplace le long de l'élément unitaire de conduite, ce dernier restant fixe pendant le processus de pose. La machine selon l'invention présente ainsi une conception simplifiée par rapport à une machine devant déplacer linéairement l'élément unitaire de conduite tout en le faisant pivoter autour de son axe. De plus, les éléments de bobinage étant situés chacun dans un plan sensiblement longitudinal à l'élément unitaire de conduite, il est possible de poser les câbles en hélice sur la surface externe de l'élément unitaire de conduite sans exercer sur ces derniers de contrainte de torsion, ce qui évite les problèmes inhérents à ce type de contrainte.

De façon avantageuse, chaque élément de bobinage comprend :
une bobine de stockage sur laquelle est enroulé le câble à poser sur l'élément unitaire de conduite ;
une bobine de dévidoir destinée à recevoir une extrémité du câble déroulé depuis la bobine de stockage pour l'amener sur la surface externe de l'élément unitaire de conduite ;
un système de guidage destiné à guider le câble déroulé depuis la bobine de stockage vers la surface externe de l'élément unitaire de conduite ; et
un système de compression pour appliquer un effort de compression sur le câble venant se poser sur la surface externe de l'élément unitaire de conduite.

Le système de compression de chaque élément de bobinage peut comprendre une tige télescopique dont une extrémité est fixée sur la bobine de dévidoir et une extrémité opposée est raccordée à un galet avec interposition d'un ressort, ledit galet étant apte à venir rouler sur la surface externe de l'élément unitaire de guide lors de la pose du câble. De la sorte, le galet permet d'appliquer un effort de compression sur le câble venant se déposer sur la surface externe de l'élément unitaire de conduite, et ainsi d'améliorer sa fixation.

De même, le système de guidage de chaque élément de bobinage peut comprendre un dispositif à rouleaux pour retirer automatiquement des bandes plastiques recouvrant des bandes d'adhésif du câble préalablement à la pose dudit câble sur la surface externe de l'élément unitaire de conduite, et un déflecteur pour guider le câble depuis la bobine de dévidoir vers le dispositif à rouleaux. Les bandes d'adhésif permettent, de façon avantageuse, d'assurer une fixation du câble sur la surface externe de l'élément unitaire de conduite. Dans ce cas, le dispositif à rouleaux peut comprendre un rouleau d'entraînement destiné à recevoir une extrémité libre du câble provenant de la bobine de dévidoir et des rouleaux d'enroulement sur lesquels sont destinées à s'enrouler les bandes plastiques décollées du câble.

Les bobines de stockage et de dévidoir peuvent être avantageusement munies chacune d'un système de freinage. La présence d'un tel système de freinage permet, d'une part d'appliquer une tension lors de la pose du câble, et d'autre part de ralentir rapidement les bobines en fin de de pose.

Chaque élément de bobinage peut être monté sur une face du cadre par l'intermédiaire d'une platine apte à pivoter selon une direction radiale par rapport à l'axe de symétrie de l'élément unitaire de conduite, le cadre comprenant en outre un système à vis sans fin couplé à chaque platine pour régler l'inclinaison de chaque élément de bobinage par rapport au plan longitudinal dans lequel il se situe. Dans ce cas, les systèmes à vis sans fin sont de préférence synchronisés entre eux pour permettre de donner une même inclinaison à chaque élément de bobinage.

La machine peut comprendre en outre un chariot supportant le cadre par l'intermédiaire d'une couronne de guidage destinée à être centrée sur l'axe de symétrie de l'élément unitaire de conduite, le chariot étant muni de roues entraînées par le moteur pas à pas de déplacement linéaire et apte à se déplacer le long d'un rail de guidage.

Dans ce cas, la couronne de guidage du chariot peut comprendre une roue dentée qui est engrenée en rotation par le moteur pas à pas de déplacement rotatif. De plus, le chariot peut comprendre des moyens de réglage de la position verticale et de la position horizontale du cadre, et des rouleaux de guidage pour l'élément unitaire de conduite.

De préférence, la machine comprend en outre des moyens optiques pour déterminer la distance entre le cadre et une extrémité de l'élément unitaire de conduite vers laquelle se déplace le cadre. Ces moyens optiques permettent ainsi, non seulement de surveiller avec précision la progression de la pose des câbles, mais également d'asservir le mouvement rotatif du cadre avec son déplacement linéaire.

Le cadre peut présenter une forme de polygone avec plusieurs faces sur lesquelles sont montés les éléments de bobinage.

L'invention a également pour objet un procédé de pose en hélice de câbles sur la surface externe d'un élément unitaire de conduite de transport de fluides au moyen d'une machine telle que définie précédemment, comprenant :
le positionnement du cadre rotatif de la machine autour d'un axe de symétrie de l'élément unitaire de conduite à l'une des extrémités de celui-ci ; et
le pilotage des moteurs pas à pas de déplacement linéaire et de déplacement rotatif de la machine pour permettre une avance linéaire de la machine vers l'extrémité opposée de l'élément unitaire de conduite avec une rotation synchronisée de son cadre rotatif afin d'assurer la pose simultanée en hélice de l'ensemble des câbles sur la surface externe de l'élément unitaire de pose

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective montrant en situation une machine de spiralage selon un mode de réalisation de l'invention ;
- la figure 2 montre un exemple de support d'élément unitaire de conduite pouvant être utilisé en association avec la machine de spiralage de la figure 1 ;
- la figure 3 montre plus en détails le déplacement linéaire de la machine de spiralage de la figure 1 ;
- la figure 4 est une vue de côté de la machine de spiralage de la figure 1 ;
- la figure 5 est une vue de trois quart face de la machine de spiralage sans son cadre rotatif ;
- la figure 6 est une loupe de la figure 5 montrant le mécanisme de pivotement du cadre rotatif par rapport au chariot ;
- les figures 7 et 8 sont des vues en perspective du cadre rotatif de la machine de spiralage, respectivement en vue aval et en vue amont ;
- la figure 9 montre en détail la structure de support du cadre rotatif des figures 7 et 8 ;
- la figure 10 est une vue en perspective d'un élément de bobinage de la machine de spiralage de la figure 1 ;
- la figure 11 est une vue de côté d'une bobine de dévidoir de l'élément de bobinage de la figure 10 ;
- la figure 12 montre un dispositif à rouleaux du système de guidage de l'élément de bobinage de la figure 10 ;
- la figure 13 est une vue de dessous du dispositif à rouleaux de la figure 12 ;
- la figure 14 montre en perspective un système de compression de l'élément de bobinage de la figure 10 ;
- la figure 15 est une vue de face du cadre rotatif de la machine de spiralage de la figure 1 ;
- la figure 16 est une vue partielle et en perspective du cadre rotatif de la figure 15 montrant plus en détails le mécanisme de réglage de l'inclinaison de chaque élément de bobinage ;
- la figure 17 est une loupe de la figure 16 ; et
- la figure 18 montre partiellement un élément unitaire de conduite dont la surface externe comprend des câbles posés en hélice grâce à la machine de spiralage de la figure 1.

### Description détaillée de l'invention

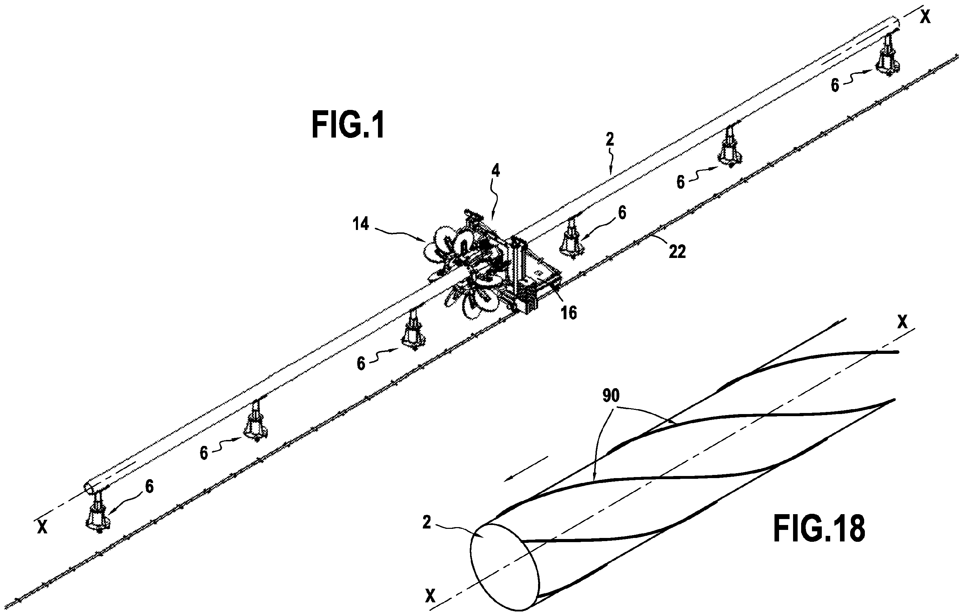

L'invention concerne une machine de pose simultanée et en hélice de câbles sur la surface externe d'un élément unitaire de conduite sous-marine (appelée ci-après « machine de spiralage ») telle que celle représentée sur la figure 1.

Les câbles posés peuvent être des câbles électriques enroulés autour de la surface externe de l'enveloppe interne d'une conduite sous-marine à double enveloppe pour la chauffer par effet Joule (dans le cas d'un chauffage tracé) ou des câbles à fibre optique enroulés autour de la surface externe de l'enveloppe interne d'une conduite sous-marine à double enveloppe pour surveiller les déformations mécaniques s'appliquant sur celles-ci.

Typiquement, de tels câbles sont des câbles plats qui sont munis d'une protection en caoutchouc et qui sont recouverts sur l'une de leurs faces de deux bandes d'adhésif qui permettent de les maintenir sur cette surface, ces bandes d'adhésif étant protégées par des bandes plastiques.

Sur la figure 1, sont représentés un élément unitaire de conduite 2 destiné, une fois assemblé à d'autres éléments unitaires de conduite, à former l'enveloppe d'une conduite sous-marine (par exemple l'enveloppe interne d'une conduite à double enveloppe), ainsi qu'une machine de spiralage 4 conforme à l'invention.

L'élément unitaire de conduite 2 est positionné horizontalement au-dessus du sol en étant supporté par une pluralité de supports 6 (au nombre de six sur la figure) régulièrement espacés les uns des autres.

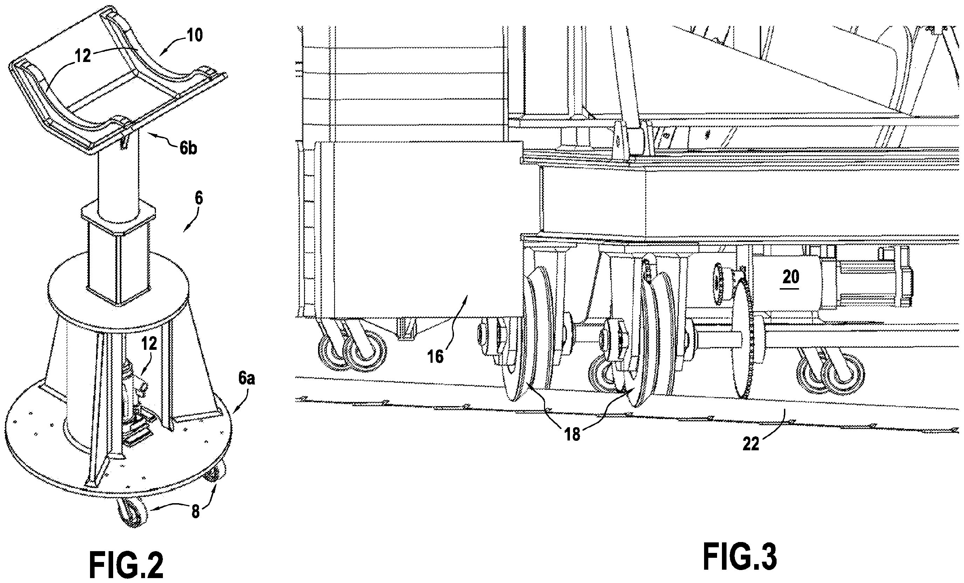

Comme représenté plus en détails sur la figure 2, les supports 6 sont des plots qui sont munis en partie inférieure 6a de roulettes 8 pour être déplacés et en partie supérieure 6b d'une assise 10 de forme arrondie sur laquelle repose l'élément unitaire de conduite.

La hauteur de l'assise 10 de ces supports 6 peut être réglée, par exemple par l'intermédiaire d'un vérin pneumatique 12. De plus, cette assise 10 est de préférence munie de bandes en élastomère 12 pour limiter l'écrasement des câbles posés sur la surface externe de l'élément unitaire de conduite.

La machine de spiralage 4 selon l'invention est doublement mobile par rapport à l'élément unitaire de conduite fixe et reposant horizontalement sur les supports 6 : elle est capable de se déplacer linéairement le long de l'élément unitaire de conduite 2, tout en étant apte à pivoter autour d'un axe de symétrie X-X de celui-ci.

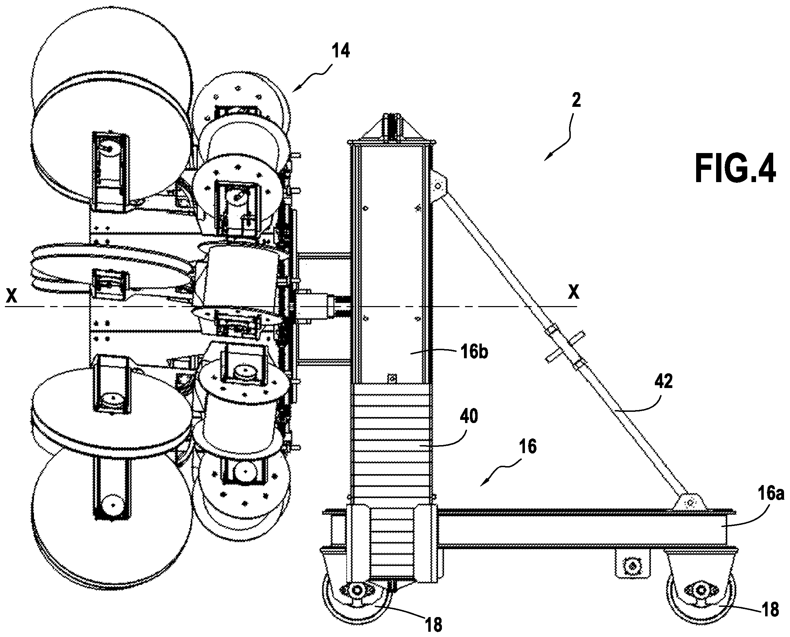

De plus, la machine de spiralage 4 selon l'invention se compose principalement d'un cadre rotatif 14 muni des moyens de spiralage proprement dits (décrits ultérieurement) et d'un chariot mobile 16 supportant le cadre (figure 4).

Comme représenté sur la figure 3, pour se déplacer le long de l'élément unitaire de conduite, le chariot mobile 16 de la machine de spiralage est muni de roues 18 qui sont entraînées par un moteur pas à pas de déplacement linéaire 20 et qui sont guidées sur un rail 22 posé au sol parallèlement à l'élément unitaire de conduite 2.

Les figures 4 à 6 représentent plus en détails la structure du chariot mobile 16 de la machine de spiralage selon l'invention. Ce chariot présente une plateforme inférieure 16a sous laquelle sont montées les roues 18, ainsi qu'une plateforme supérieure 16b sensiblement verticale.

Au niveau de sa plateforme supérieure, le chariot mobile 16 supporte le cadre rotatif 14 par l'intermédiaire d'une couronne de guidage 24 qui est positionnée de sorte à être centrée sur l'axe de symétrie X-X de l'élément unitaire de conduite.

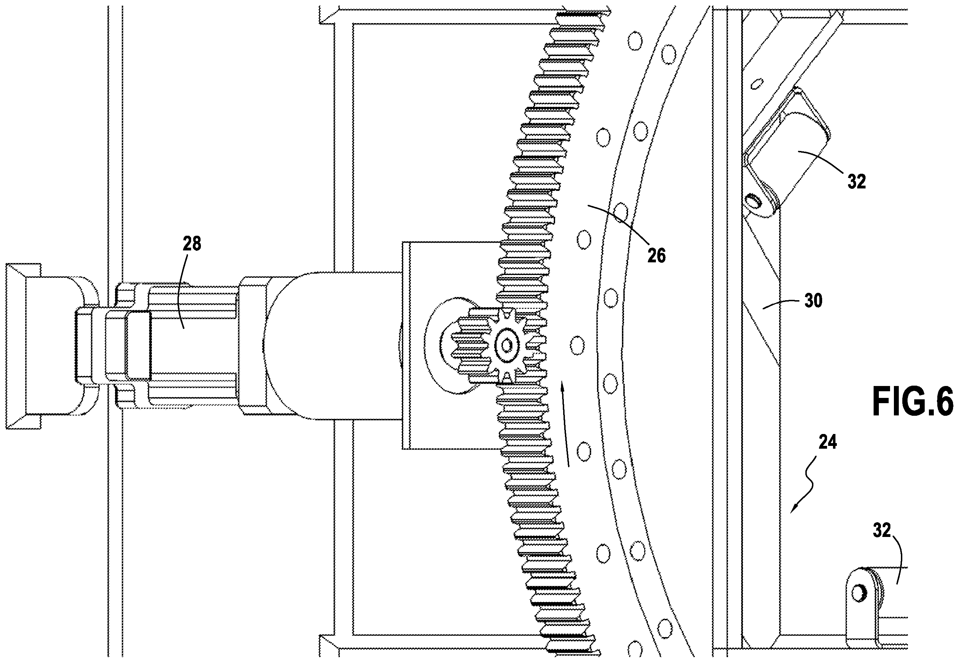

A sa périphérie, la couronne de guidage 24 du chariot mobile porte une roue dentée 26 (voir la figure 6) qui est également centrée sur l'axe X-X et qui est engrenée en rotation par un moteur pas à pas de déplacement rotatif 28. Par actionnement du moteur pas à pas de déplacement rotatif 28, la roue dentée 26 est apte à pivoter autour de l'axe X-X, entraînant ainsi en rotation le cadre rotatif 24 muni des moyens de spiralage proprement dits autour de l'élément unitaire de conduite.

La couronne de guidage 24 du chariot mobile comprend également une fenêtre 30, par exemple de forme carrée, destinée à être traversée par l'élément unitaire de conduite lors du déplacement linéaire de la machine de spiralage. Des rouleaux de guidage 32 positionnés à l'intérieur de cette fenêtre 30 permettent d'assurer un bon centrage de l'élément unitaire de conduite lors du déplacement linéaire de la machine de spiralage.

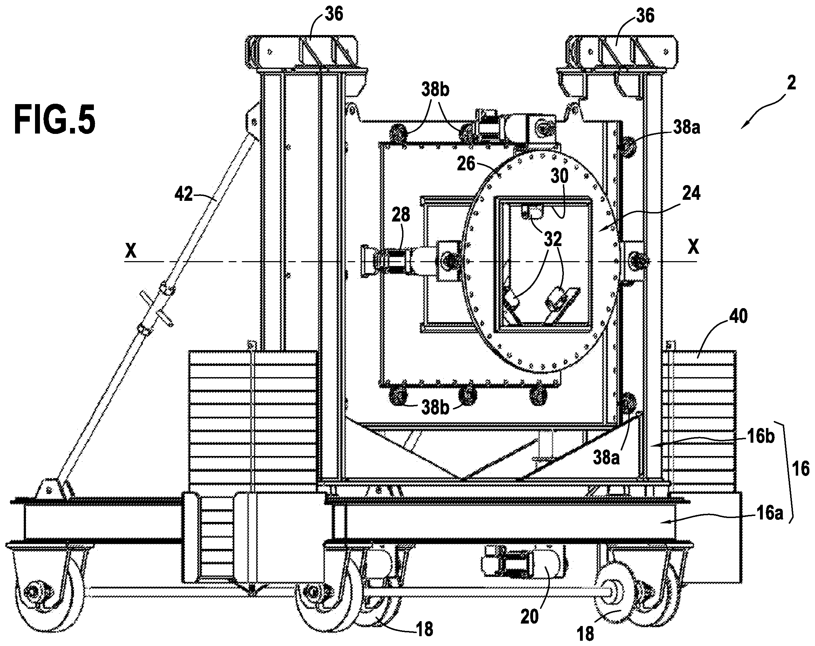

Au niveau de sa plateforme supérieure, le chariot mobile 16 porte également deux lasers 36 (figure 5). Ces lasers sont calibrés pour émettre un faisceau optique vers l'aval (par rapport au déplacement linéaire de la machine de spiralage) en direction d'un panneau réfléchissant (non représenté sur les figures) positionné en bout d'élément unitaire de conduite. Ces moyens optiques permettent ainsi, non seulement de surveiller avec précision la progression de la pose des câbles, mais également d'asservir le mouvement rotatif de la machine de spiralage avec son déplacement linéaire.

Par ailleurs, toujours au niveau de sa plateforme supérieure 16b, le chariot mobile 16 comprend des moyens de réglage de la position verticale et de la position horizontale du cadre rotatif 14 de la machine de spiralage.

Par exemple, ces moyens se présentent sous la forme de rouleaux 38a disposés verticalement et de rouleaux 38b disposés horizontalement qui permettent de déplacer dans les directions verticale et horizontale la couronne de guidage 24 supportant le cadre rotatif 14 de la machine de spiralage (figure 5). Un système de contrepoids 40 peut permettre de faciliter le réglage de la position verticale du cadre.

Enfin, un système de tiges 42 reliant la plateforme supérieure 16b à la plateforme inférieure 16a du chariot mobile permet de régler la verticalité de la plateforme supérieure 16b du chariot.

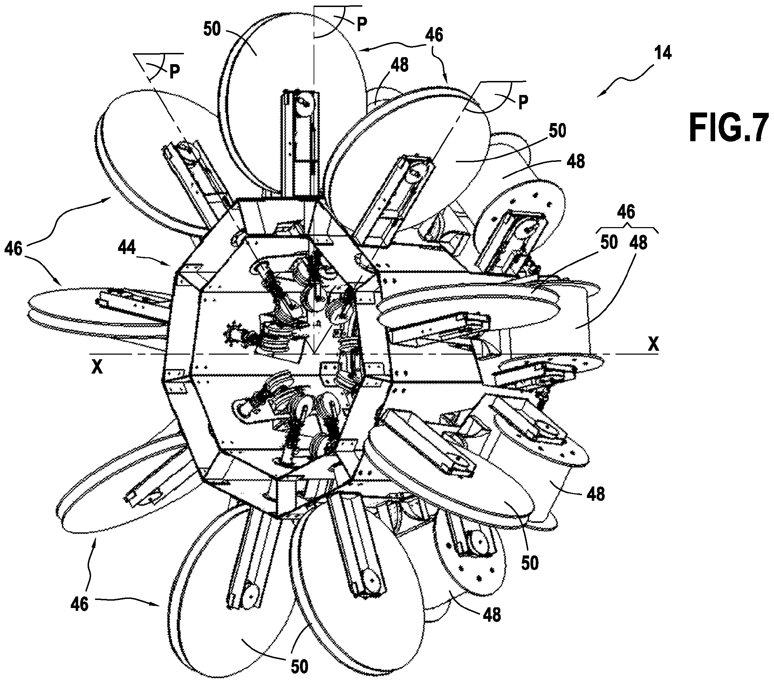

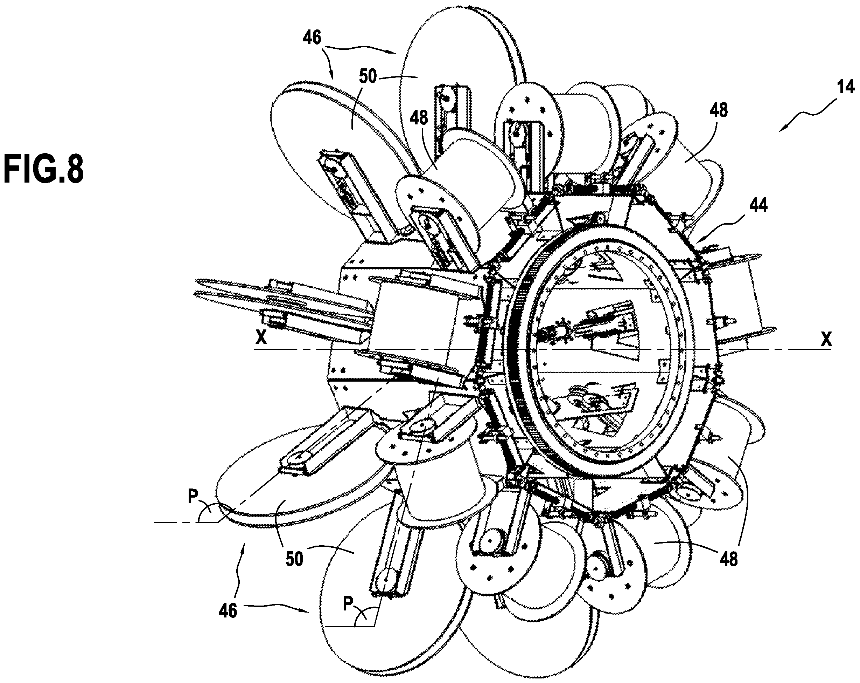

En liaison avec les figures 7 à 14, on décrira maintenant différentes caractéristiques du cadre rotatif 14 de la machine de spiralage selon l'invention.

Comme indiqué précédemment, le cadre rotatif 14 est muni des moyens de bobinage proprement dits et est apte à pivoter autour de l'axe de symétrie X-X de l'élément unitaire de conduite.

A cet effet, le cadre rotatif comprend une structure de support 44 ayant une forme de polygone avec une pluralité de faces sur lesquelles sont montés des éléments de bobinage 46. Sur chacune des faces de cette structure polygonale est monté un élément de bobinage 46.

Sur l'exemple illustré, la structure de support 44 présente une forme de nonagone avec neuf faces permettant de supporter neuf éléments de bobinage 46.

Dans cet exemple de réalisation, il est ainsi prévu de poser simultanément neuf câbles en hélice sur la surface externe de l'élément unitaire de conduite. Bien entendu, en fonction du nombre de câbles à poser, la structure de support du cadre rotatif pourrait présenter une forme différente.

Les éléments de bobinage 46 sont destinés à recevoir des câbles à poser en hélice sur l'élément unitaire de conduite. Ces éléments de bobinage sont régulièrement espacés les uns des autres autour de l'axe de symétrie X-X de l'élément unitaire de conduite et sont chacun situés dans un plan P qui est sensiblement longitudinal à l'élément unitaire de conduite.

De façon plus précise, chaque élément de bobinage 46 comprend notamment une bobine de stockage 48 sur laquelle est enroulé le câble à poser muni de ses bandes plastiques, ainsi qu'une bobine de dévidoir 50 destinée à recevoir une extrémité du câble déroulé depuis la bobine de stockage pour l'amener vers la surface externe de l'élément unitaire de conduite, les bobines de stockage et de dévidoir de chaque élément de bobinage étant alignés dans le plan P.

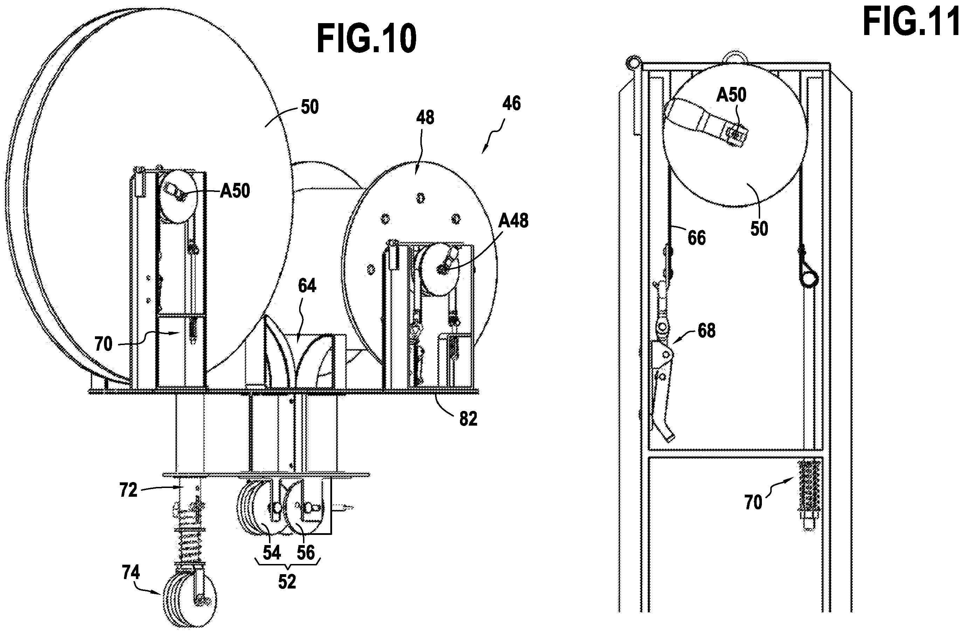

Comme représenté sur la figure 10, chaque élément de bobinage 46 comprend également un système de guidage destiné à guider le câble déroulé depuis la bobine de stockage 48 vers la surface externe de l'élément unitaire de conduite.

Le système de guidage de chaque élément de bobinage comprend plus précisément un dispositif à rouleaux 52 pour retirer automatiquement les bandes plastiques recouvrant les deux bandes d'adhésif du câble préalablement à la pose de ce dernier sur la surface externe de l'élément unitaire de conduite.

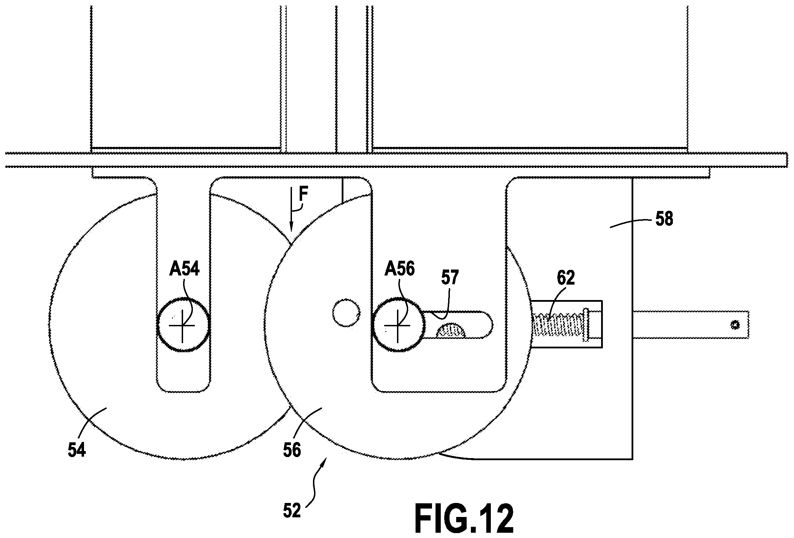

Ce dispositif à rouleaux 52 est visible en détail sur la figure 12. Il se compose d'un rouleau d'entraînement 54 qui est destiné à recevoir une extrémité libre du câble provenant de la bobine de dévidoir 50 et de deux rouleaux d'enroulement 56 montés sur un support 58 et sur lesquels sont destinées à s'enrouler les deux bandes plastiques qui ont été décollées du câble.

Ces rouleaux 54, 56 présentent des axes de rotation respectifs A54, A56 qui sont parallèles (les rouleaux d'enroulement 56 sont coaxiaux). Les rouleaux sont par ailleurs positionnés en contact l'un de l'autre de sorte à ce que le rouleau d'entraînement 54 entraîne en rotation les deux rouleaux d'enroulement 56. De plus, les rouleaux d'enroulement 56 sont mobiles en translation le long d'une rainure axiale 57.

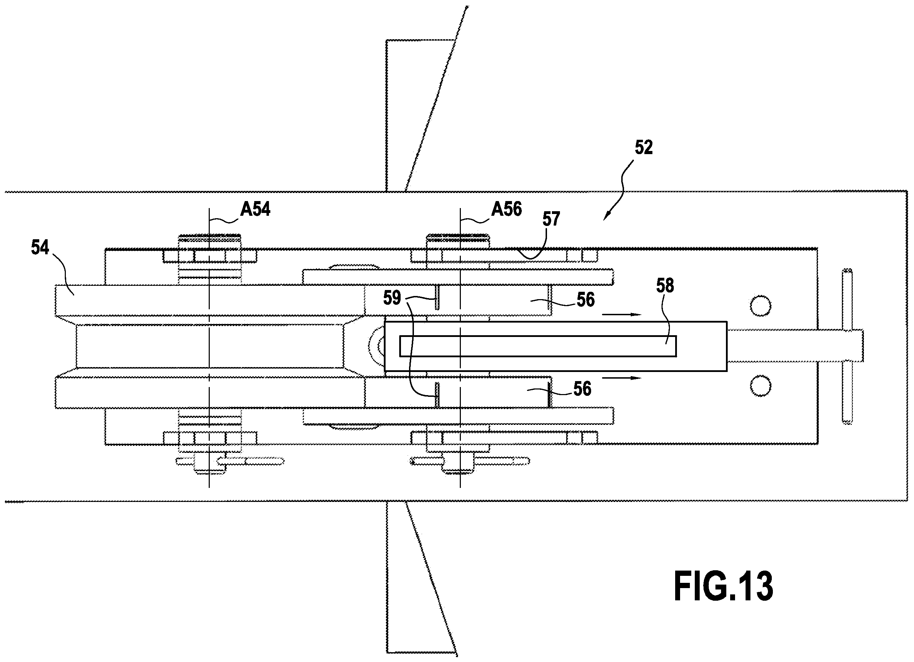

Comme représenté sur la figure 13, les rouleaux d'enroulement 56 de ce dispositif présentent chacun une encoche 59 destinée à recevoir une extrémité d'une bande plastique (non représentée sur la figure) à décoller du câble.

Le câble encore revêtu de ses deux bandes plastiques passe entre le rouleau d'entraînement 54 et les deux rouleaux d'enroulement 56 comme schématisé par la flèche F sur la figure 12. Un ressort 62 dont une extrémité est fixée sur le support 58 des rouleaux d'enroulement 56 permet de maintenir ces derniers toujours en contact avec le rouleau d'entraînement 54. L'extrémité des bandes plastiques étant ancrées dans les encoches 59 respectives des rouleaux d'enroulement, ces bandes viennent s'enrouler autour des rouleaux d'enroulement au fur et à mesure que le câble passe entre les deux rouleaux 54, 56.

De plus, au fur et à mesure que les deux bandes plastiques viennent s'enrouler sur les rouleaux d'enroulement 56, le diamètre de ces derniers augmente, de sorte que l'axe A56 des rouleaux d'enroulement se décale en se translatant axialement dans la rainure 57. La présence du ressort 62 permet de toujours maintenir en contact les rouleaux d'entraînement et d'enroulement entre eux malgré cette translation axiale de l'axe des rouleaux d'enroulement.

Le système de guidage de chaque élément de bobinage comprend également un déflecteur 64 pour guider le câble depuis la bobine de dévidoir 50 vers le dispositif à rouleaux 52 précédemment décrit, puis vers la surface externe de l'élément unitaire de conduite. Comme représenté sur la figure 10, la présence d'un tel déflecteur 64 en forme d'entonnoir finissant par une rampe permet notamment d'éviter que le câble ne se coince lors de son déplacement depuis la bobine de dévidoir vers l'élément unitaire de conduite.

Selon une disposition avantageuse de l'invention illustrée sur la figure 11, les bobines de stockage 48 et de dévidoir 50 de chaque élément de bobinage sont munies chacune d'un système de freinage.

Les bobines 48, 50 qui sont montées sur un palier lisse (non représenté sur les figures) sont munies chacune d'une bande ajustable de freinage 66 qui sont fixées à une extrémité par un système de crochet 68 et raccordées à l'extrémité à un système à ressort 70. Ce dernier permet de générer sur les bobines un effort en contre-rotation (de l'ordre de quelques Newton) qui assure, d'une part un effort de tension sur le câble au cours de sa pose, et d'autre part un ralentissement progressif des bobines lorsque le processus de pose des câbles est arrêté.

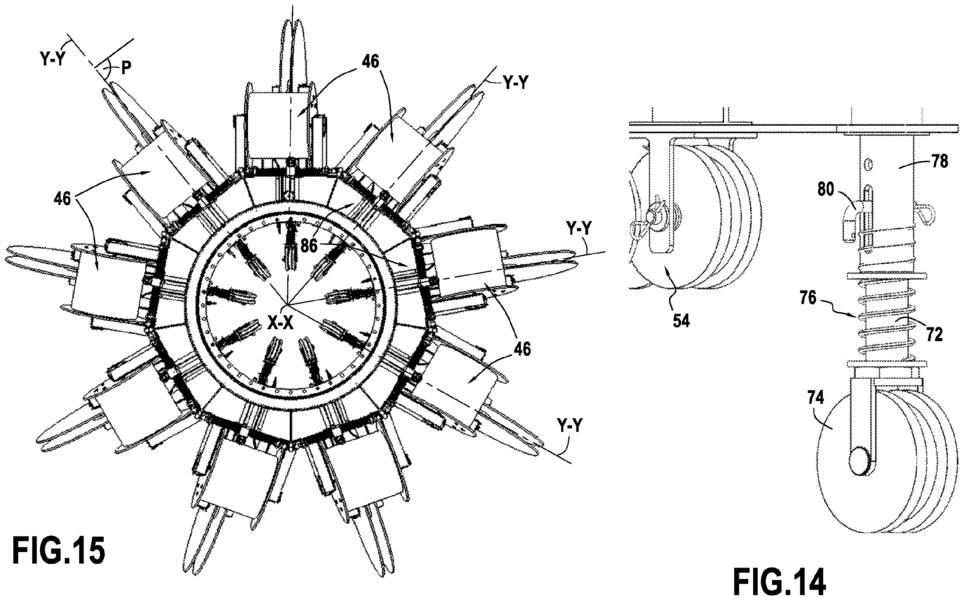

Comme représenté notamment sur les figures 10 et 14, chaque élément de bobinage comprend encore un système de compression pour appliquer un effort de compression sur le câble venant se poser sur la surface externe de l'élément unitaire de conduite.

Le système de compression comprend une tige télescopique 72 dont une extrémité est fixée sur la bobine de dévidoir 50 et une extrémité opposée est raccordée à un galet 74 avec interposition d'un ressort 76. Plus précisément, le galet 74 est fixé à l'extrémité de la tige 72, cette dernière étant apte à coulisser à l'intérieur d'un fourreau 78, le ressort 76 étant intercalé entre la tige et le fourreau.

De la sorte, le ressort 76 permet d'appliquer une pression sur le galet pour maintenir ce dernier en contact avec la surface externe de l'élément unitaire de guide lors de la pose du câble. Ainsi, le galet 74 roule sur la surface externe de l'élément unitaire de conduite et exerce constamment un effort de compression sur le câble lors de sa pose, et ce quels que soient les défauts de concentricité de l'élément unitaire de conduite.

De plus, le galet 74 peut prendre deux positions : une position dite de travail dans laquelle le ressort exerce une pression sur celui-ci lors de la pose du câble, et une position de repos (non représentée sur les figures) dans laquelle la tige 72 portant le galet est rétractée à l'intérieur du fourreau 78 et bloquée dans cette position par l'intermédiaire d'une goupille 80.

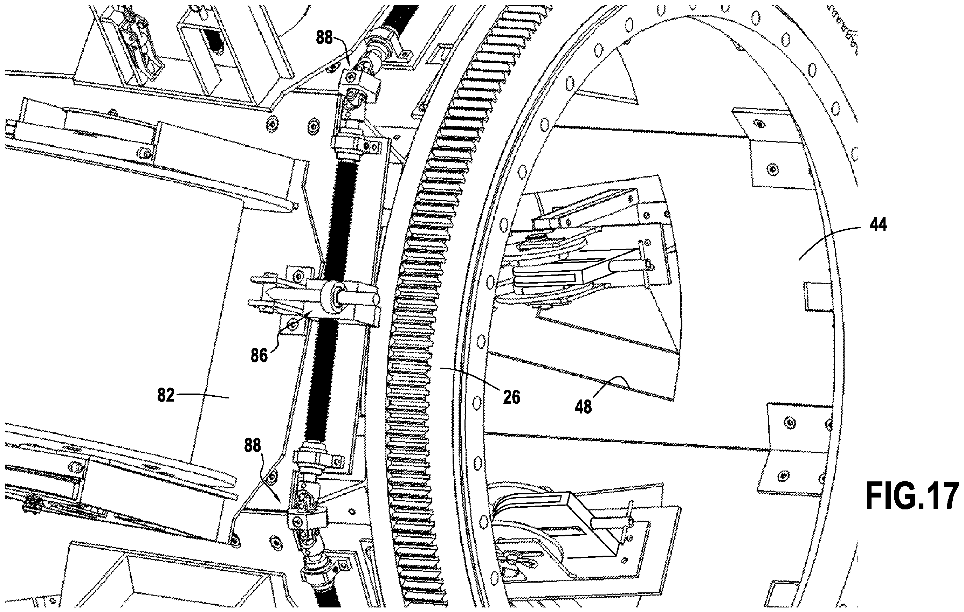

Selon une autre disposition avantageuse de l'invention, chaque élément de bobinage 46 est monté sur une face de la structure de support 44 par l'intermédiaire d'une platine 82 (voir les figures 10, 16 et 17) qui est apte à pivoter autour d'un axe radial Y-Y par rapport à l'axe de symétrie X-X de l'élément unitaire de conduite (voir la figure 15).

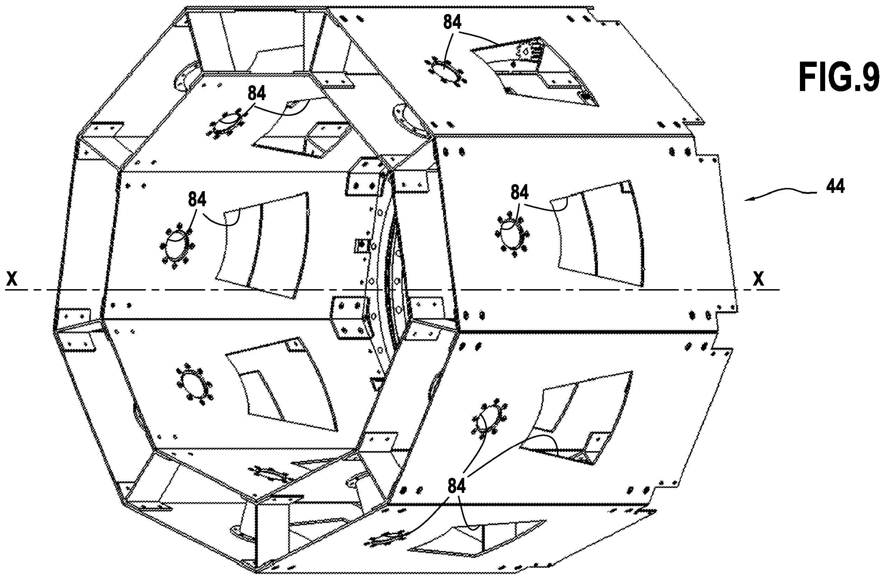

En particulier, chaque élément de bobinage 46 est solidaire d'une platine 82 qui est fixée sur la structure de support 44, les bobines de stockage 48 et de dévidoir 50 de chaque élément de bobinage étant positionnées du côté extérieur à la structure de support, tandis que le dispositif à rouleaux 52 et le système de compression font saillies du côté intérieur en traversant des fenêtres 84 pratiquées dans la structure de support (voir la figure 9).

Par ailleurs, chaque platine 82 est couplée pour le réglage de son pivotement autour des axes radiaux Y-Y à un système à vis sans fin 86. En réglant le pivotement des platines 82 par rapport aux axes radiaux Y-Y, on règle ainsi l'inclinaison de chaque élément de bobinage 46 par rapport au plan longitudinal P dans lequel il se situe. Ce réglage permet notamment de limiter l'effet de torsion s'exerçant sur les câbles par la rotation du cadre de la machine de spiralage lors de leur pose sur la surface externe de l'élément unitaire de conduite.

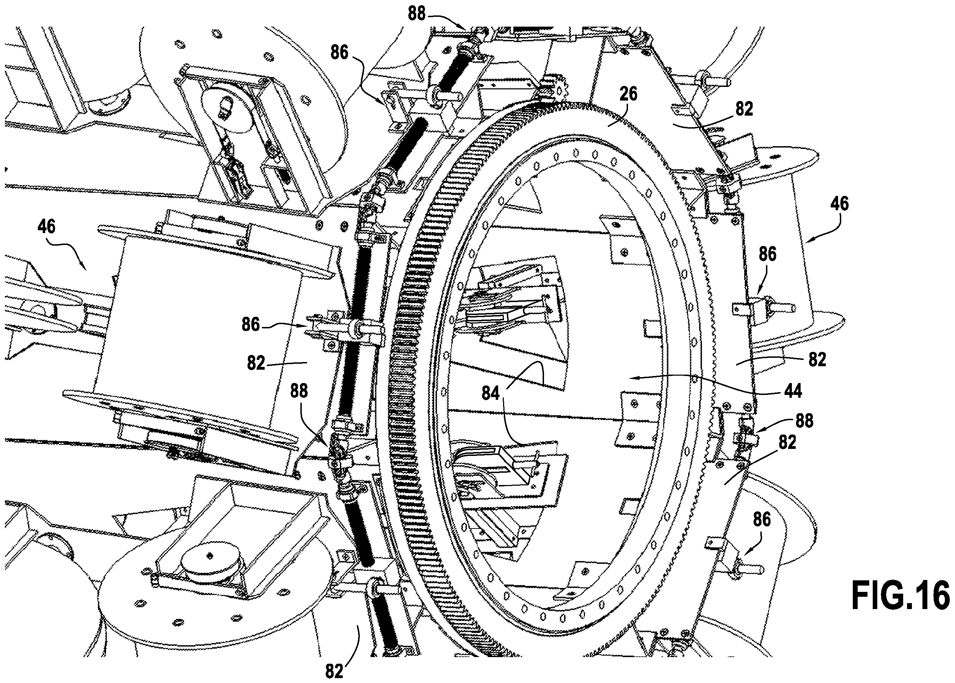

De préférence, ces systèmes à vis sans fin 86 sont synchronisés entre eux pour permettre de donner une même inclinaison à chaque élément de bobinage. A cet effet, les systèmes sans fin de la machine de spiralage sont fixés les uns aux autres par des joints de cardan 88 (voir la figure 16 notamment).

Un exemple d'application de la machine de spiralage selon l'invention à la pose simultanée de câbles en hélices sur la surface externe d'un élément unitaire de conduite est décrit ci-après.

Dans cet exemple d'application, l'élément unitaire de conduite présente une longueur de 50m et l'on cherche à poser sur sa surface externe neuf câbles en hélice, avec par exemple un pas d'hélice de 6m. Le pas d'hélice est obtenu en réglant l'inclinaison de chaque élément de bobinage 46 par rapport au plan longitudinal P dans lequel il se situe.

Comme représenté sur la figure 1, l'élément unitaire de conduite 2 est positionné horizontalement sur les supports 6. Pour un élément unitaire de conduite ayant une longueur de 50m, on disposera par exemple six supports 6 espacés de 10m entre eux avec un support à chaque extrémité de l'élément unitaire de conduite.

La machine de spiralage 2 est positionnée à l'une des extrémités de l'élément unitaire de conduite avec son cadre rotatif 14 disposé autour de l'élément unitaire de conduite. Les lasers 36 de la machine de spiralage sont pointés en direction du panneau réfléchissant positionné à l'autre extrémité de l'élément unitaire de conduite.

Le moteur pas à pas de déplacement linéaire 20 et le moteur pas à pas de déplacement rotatif 28 de la machine de spiralage sont pilotés à distance à partir d'une station de travail (non représentée sur les figures). A l'aide de la mesure de l'avance linéaire de la machine de spiralage obtenue au moyen des moyens optiques (lasers 36 et panneau réfléchissant), la station de travail permet notamment de synchroniser ces deux moteurs 20, 28 pour permettre d'assurer une pose des neufs câbles avec le pas d'hélice voulu et en fonction de la vitesse de déplacement linéaire du chariot de la machine de spiralage. En connaissant l'avancée de la machine de spiralage, la station de travail adapte la vitesse de rotation du cadre rotatif. En particulier, lorsque la rotation est en retard, la station de travail impose une vitesse de rotation plus élevée pour rattraper le retard (et inversement).

Différentes programmations des moteurs 20, 28 est possible. Les moteurs pas à pas peuvent être programmés pour fonctionner en « mode vitesse » dans lequel la consigne programmée est une consigne de vitesse d'avance de la machine (par exemple 5m/min). Les moteurs pas à pas peuvent également être programmés pour fonctionner en « mode couple moteur » dans lequel la consigne programmée est une consigne de couple moteur. Les moteurs pas à pas peuvent encore être programmés pour fonctionner en « mode position » dans lequel la consigne programmée est le nombre de pas moteur (par exemple 5000 pas).

Une fois les moteurs pas à pas 20, 28 programmés au niveau de la station de travail, la machine de spiralage avance linéairement vers l'extrémité opposée de l'élément unitaire de conduite avec une rotation synchronisée de son cadre rotatif afin d'assurer la pose simultanée en hélice de l'ensemble des neuf câbles sur la surface externe de l'élément unitaire de pose. L'arrêt de l'avance de la machine de spiralage s'effectue de façon automatique grâce aux moyens optiques.

La figure 18 montre le résultat du spiralage avec la surface externe de l'élément unitaire de conduite 2 qui présente neuf câbles 90 posés en hélice.

## Revendications

1. Machine (4) pour la pose en hélice de câbles (90) sur la surface externe d'un élément unitaire de conduite (2) de transport de fluides, comprenant :
un cadre rotatif (14) destiné à être centré autour d'un axe de symétrie (X-X) de l'élément unitaire de conduite, le cadre supportant une pluralité d'éléments de bobinage (46) destinés à recevoir des câbles à poser sur l'élément unitaire de conduite, les éléments de bobinage étant situés chacun dans un plan (P) sensiblement longitudinal à l'élément unitaire de conduite et espacés les uns des autres autour de l'axe de symétrie de l'élément unitaire de conduite ;
des moyens (82, 86) pour régler l'inclinaison de chaque élément de bobinage par rapport au plan longitudinal dans lequel il se situe ;
un moteur pas à pas de déplacement linéaire (20) pour déplacer le cadre le long de l'élément unitaire de conduite ; et
un moteur pas à pas de déplacement rotatif (28) pour faire pivoter le cadre autour de l'axe de symétrie de l'élément unitaire de conduite ;
chaque élément de bobinage (46) comprenant :
une bobine de stockage (48) sur laquelle est enroulé le câble à poser sur l'élément unitaire de conduite ;
une bobine de dévidoir (50) destinée à recevoir une extrémité du câble déroulé depuis la bobine de stockage pour l'amener sur la surface externe de l'élément unitaire de conduite ;
un système de guidage destiné à guider le câble déroulé depuis la bobine de stockage vers la surface externe de l'élément unitaire de conduite ; et
un système de compression pour appliquer un effort de compression sur le câble venant se poser sur la surface externe de l'élément unitaire de conduite.

2. Machine selon la revendication 1, dans laquelle le système de compression de chaque élément de bobinage comprend une tige télescopique (72) dont une extrémité est fixée sur la bobine de dévidoir et une extrémité opposée est raccordée à un galet (74) avec interposition d'un ressort (76), ledit galet étant apte à venir rouler sur la surface externe de l'élément unitaire de guide lors de la pose du câble.

3. Machine selon l'une des revendications 1 et 2, dans laquelle le système de guidage de chaque élément de bobinage comprend :
un dispositif à rouleaux (52) pour retirer automatiquement des bandes plastiques recouvrant des bandes d'adhésif du câble préalablement à la pose dudit câble sur la surface externe de l'élément unitaire de conduite ; et
un déflecteur (64) pour guider le câble depuis la bobine de dévidoir vers le dispositif à rouleaux.

4. Machine selon la revendication 3, dans lequel le dispositif à rouleaux (52) comprend un rouleau d'entraînement (54) destiné à recevoir une extrémité libre du câble provenant de la bobine de dévidoir et des rouleaux d'enroulement (56) sur lesquels sont destinées à s'enrouler les bandes plastiques décollées du câble.

5. Machine selon l'une quelconque des revendications 1 à 4, dans laquelle les bobines de stockage (48) et de dévidoir (50) sont munies chacune d'un système de freinage (66, 68, 70).

6. Machine selon l'une quelconque des revendications 1 à 5, dans laquelle chaque élément de bobinage est monté sur une face du cadre par l'intermédiaire d'une platine (82) apte à pivoter autour d'un axe radial (Y-Y) par rapport à l'axe de symétrie (X-X) de l'élément unitaire de conduite, le cadre comprenant en outre un système à vis sans fin (86) couplé à chaque platine pour régler l'inclinaison de chaque élément de bobinage par rapport au plan longitudinal dans lequel il se situe.

7. Machine selon la revendication 6, dans laquelle les systèmes à vis sans fin (86) sont synchronisés entre eux pour permettre de donner une même inclinaison à chaque élément de bobinage.

8. Machine selon l'une quelconque des revendications 1 à 6, comprenant en outre un chariot (16) supportant le cadre (14) par l'intermédiaire d'une couronne de guidage (24) destinée à être centrée sur l'axe de symétrie de l'élément unitaire de conduite, le chariot étant muni de roues (18) entraînées par le moteur pas à pas de déplacement linéaire et aptes à se déplacer le long d'un rail de guidage (22).

9. Machine selon la revendication 8, dans laquelle la couronne de guidage (24) du chariot comprend une roue dentée (26) qui est engrenée en rotation par le moteur pas à pas de déplacement rotatif.

10. Machine selon l'une des revendications 8 et 9, dans lequel le chariot (16) comprend :
des moyens (38a, 38b) de réglage de la position verticale et de la position horizontale du cadre ; et
des rouleaux de guidage (32) pour l'élément unitaire de conduite.

11. Machine selon l'une quelconque des revendications 1 à 10, comprenant en outre des moyens optiques (36) pour déterminer la distance entre le cadre et une extrémité de l'élément unitaire de conduite vers laquelle se déplace le cadre.

12. Machine selon l'une quelconque des revendications 1 à 11, dans laquelle le cadre présente une forme de polygone avec plusieurs faces sur lesquelles sont montés les éléments de bobinage.

13. Procédé de pose en hélice de câbles sur la surface externe d'un élément unitaire de conduite (2) de transport de fluides au moyen d'une machine selon l'une quelconque des revendications 1 à 12, comprenant :
le positionnement du cadre rotatif (14) de la machine autour d'un axe de symétrie (X-X) de l'élément unitaire de conduite à l'une des extrémités de celui-ci ; et
le pilotage des moteurs pas à pas de déplacement linéaire et de déplacement rotatif (20, 28) de la machine pour permettre une avance linéaire de la machine vers l'extrémité opposée de l'élément unitaire de conduite avec une rotation synchronisée de son cadre rotatif afin d'assurer la pose simultanée en hélice de l'ensemble des câbles sur la surface externe de l'élément unitaire de pose.

## Patentansprüche

1. Maschine (4) zum Verlegen von Kabeln (90) in einer Helix auf der äußeren Oberfläche eines Einheitselements (2) eines Kanals zum Transport von Fluiden, umfassend:
einen drehbaren Rahmen (14), der dazu bestimmt ist, um eine Symmetrieachse (X-X) des Kanaleinheitselements zentriert zu sein, wobei der Rahmen mehrere Spulenelemente (46) trägt, die dazu bestimmt sind, Kabel aufzunehmen, die auf dem Kanaleinheitselement zu verlegen sind, wobei die Spulenelemente sich jeweils in einer Ebene (P) im Wesentlichen längs zu dem Kanaleinheitselement befinden und um die Symmetrieachse des Kanaleinheitselements voneinander beabstandet sind,
Mittel (82, 86) zum Regeln der Neigung von jedem Spulenelement in Bezug auf die Längsebene, in der es sich befindet,
einen Linearverlagerungsschrittmotor (20) zum Verlagern des Rahmens entlang des Kanaleinheitselements, und
einen Drehverlagerungsschrittmotor (28), um den Rahmen um die Symmetrieachse des Kanaleinheitselements zum Schwenken zu bringen,
wobei jedes Spulenelement (46) umfasst:
eine Lagerungsspule (48), auf der das auf dem Kanaleinheitselement zu verlegende Kabel aufgewickelt ist,
eine Haspelspule (50), die dazu bestimmt ist, ein Ende des von der Lagerungsspule abgewickelten Kabels aufzunehmen, um es auf die äußere Oberfläche des Kanaleinheitselements zu bringen,
ein Führungssystem, das dazu bestimmt ist, das von der Lagerungsspule abgewickelte Kabel hin zu der äußeren Oberfläche des Kanaleinheitselements zu führen, und
ein Drucksystem, um eine Druckkraft auf das Kabel anzuwenden, das auf der äußeren Oberfläche des Kanaleinheitselements verlegt wird.

2. Maschine nach Anspruch 1, wobei das Drucksystem von jedem Spulenelement einen Teleskopstab (72) umfasst, von dem ein Ende an der Haspelspule befestigt ist und ein entgegengesetztes Ende unter Zwischenstellung einer Feder (76) an eine Rolle (74) angeschlossen ist, wobei die Rolle dazu geeignet ist, beim Verlegen des Kabels auf der äußeren Oberfläche des Führungseinheitselements zu rollen.

3. Maschine nach einem der Ansprüche 1 und 2, wobei das Führungssystem von jedem Spulenelement umfasst:
eine Walzenvorrichtung (52), um Kunststoffbänder, die vor dem Verlegen des Kabels auf der äußeren Oberfläche des Kanaleinheitselements Klebebänder des Kabels bedecken, automatisch zu entfernen, und
eine Umlenkplatte (64) zum Führen des Kabels von der Haspelspule hin zu der Walzenvorrichtung.

4. Maschine nach Anspruch 3, wobei die Walzenvorrichtung (52) eine Antriebswalze (54), die dazu bestimmt ist, ein freies Ende des Kabels aufzunehmen, das von der Haspelspule stammt, und Aufwickelwalzen (56) umfasst, die dazu bestimmt sind, die von dem Kabel abgelösten Kunststoffbänder auf sich aufzuwickeln.

5. Maschine nach einem der Ansprüche 1 bis 4, wobei die Lager- (48) und Haspelspulen (50) jeweils mit einem Bremssystem (66, 68, 70) versehen sind.

6. Maschine nach einem der Ansprüche 1 bis 5, wobei jedes Spulenelement über eine Platine (82), die dazu geeignet ist, um eine Achse (Y-Y) zu schwenken, die radial in Bezug auf die Symmetrieachse (X-X) des Kanaleinheitselements ist, an einer Seite des Rahmens montiert ist, wobei der Rahmen ferner ein Endlosschneckensystem (86) umfasst, das an jede Platine gekoppelt ist, um die Neigung von jedem Spulenelement in Bezug auf die Längsebene, in der es sich befindet, zu regeln.

7. Maschine nach Anspruch 6, wobei die Endlosschneckensysteme (86) untereinander synchronisiert sind, um es zu ermöglichen, jedem Spulenelement eine gleiche Neigung zu verleihen.

8. Maschine nach einem der Ansprüche 1 bis 6, ferner umfassend einen Wagen (16), der den Rahmen (14) über einen Führungskranz (24) trägt, der dazu bestimmt ist, auf die Symmetrieachse des Kanaleinheitselements zentriert zu sein, wobei der Wagen mit Rädern (18) versehen ist, die von dem Linearverlagerungsschrittmotor angetrieben werden und dazu geeignet sind, sich entlang einer Führungsschiene (22) zu verlagern.

9. Maschine nach Anspruch 8, wobei der Führungskranz (24) des Wagens ein Zahnrad (26) umfasst, das drehbar mit dem Drehverlagerungsschrittmotor ineinandergreift.

10. Maschine nach einem der Ansprüche 8 und 9, wobei der Wagen (16) umfasst:
Mittel (38a, 38b) zur Regelung der vertikalen Position und der horizontalen Position des Rahmens, und
Führungswalzen (32) für das Kanaleinheitselement.

11. Maschine nach einem der Ansprüche 1 bis 10, ferner umfassend optische Mittel (36) zum Bestimmen des Abstands zwischen dem Rahmen und einem Ende des Kanaleinheitselements, zu dem der Rahmen sich hin verlagert.

12. Maschine nach einem der Ansprüche 1 bis 11, wobei der Rahmen eine Vieleckform mit mehreren Seiten aufweist, an denen die Spulenelemente montiert sind.

13. Verfahren zum Verlegen von Kabeln in einer Helix auf der äußeren Oberfläche eines Einheitselements (2) eines Kanals zum Transport von Fluiden mittels einer Maschine nach einem der Ansprüche 1 bis 12, umfassend:
die Positionierung des drehbaren Rahmens (14) der Maschine um eine Symmetrieachse (X-X) des Kanaleinheitselements an einem von dessen Enden, und
die Steuerung des Linearverlagerungs- und des Drehverlagerungsschrittmotors (20, 28) der Maschine, um eine lineare Vorwärtsbewegung der Maschine hin zu dem entgegengesetzten Ende des Kanaleinheitselements mit einer synchronisierten Drehung ihres Drehrahmens zu ermöglichen, um das gleichzeitige Verlegen sämtlicher Kabel in einer Helix auf der äußeren Oberfläche des Verlegungseinheitselements zu gewährleisten.

## Claims

1. A machine (4) for laying cables (90) helically on the outside surface of a unit pipe element (2) for transporting fluids, the machine comprising:
- a rotary frame (14) for centering about an axis of symmetry (X-X) of the unit pipe element, the frame supporting a plurality of winding elements (46) designed to receive cables for laying on the unit pipe element, each winding element being situated in a respective plane (P) that is substantially longitudinal relative to the unit pipe element and the planes being spaced apart from one another around the axis of symmetry of the unit pipe element;
- means (82, 86) for adjusting the angle of inclination of each winding element relative to the longitudinal plane in which it is situated;
- a linear travel stepper motor (20) for moving the frame along the unit pipe element; and
- a rotary travel stepper motor (28) for causing the frame to turn about that axis of symmetry of the unit pipe element;
each winding element (46) comprising:
- a storage reel (48) having the cable for laying on the unit pipe element wound thereon:
- an unwinding reel (50) for receiving one end of the cable unwound from the storage reel in order to take it to the outside surface of the unit pipe element;
- a guide system for guiding the cable unwound from the storage reel to the outside surface of the unit pipe element; and
- a compression system for applying a compression force on the cable that has just been laid on the outside surface of the unit pipe element.

2. A machine according to claim 1, wherein the compression system of each winding element comprises a telescopic rod (72) having one end fastened to the unwinding reel and an opposite end connected to a wheel (74) with a spring (76) being interposed between them, said wheel being suitable for running on the outside surface of the unit guide element while the cable is being laid.

3. A machine according to claim 1 or claim 2, wherein the guide system for each winding element comprises:
- a roller device (52) for automatically removing plastics strips covering adhesive strips of the cable prior to laying said cable on the outside surface of the unit pipe element; and
- a deflector (64) for guiding the cable from the unwinding reel to the roller device.

4. A machine according to claim 3, wherein the roller device (52) comprises a drive roller (54) for receiving a free end of the cable coming from the unwinding reel together with winding rollers (56) for having wound thereon the plastics strips separated from the cable.

5. A machine according to any one of claims 1 to 4, wherein each storage reel (48) and unwinding reel (50) is provided with a braking system (66, 68, 70).

6. A machine according to any one of claims 1 to 5, wherein each winding element is mounted on a face of the frame via a plate (82) that is suitable for turning about a radial axis (Y-Y) that is radial relative to the axis of symmetry (X-X) of the unit pipe element, the frame also comprising a wormscrew system (86) coupled to each plate in order to adjust the angle of inclination of each winding element relative to the longitudinal plane in which it is situated.

7. A machine according to claim 6, wherein the wormscrew systems (86) are synchronized with one another in order to enable the same angle of inclination to be given to each winding element.

8. A machine according to any one of claims 1 to 6, further comprising a carriage (16) supporting the frame (14) via a guide ring (24) for centering on the axis of symmetry of the unit pipe element, the carriage being provided with wheels (18) driven by the linear travel stepper motor and suitable for traveling along a guide rail (22).

9. A machine according to claim 8, wherein the guide ring (24) of the carriage includes a toothed wheel (26) that meshes rotatably with the rotary travel stepper motor.

10. A machine according to claim 8 or claim 9, wherein the carriage (16) comprises:
- means (38a, 38b) for adjusting the vertical position and the horizontal position of the frame; and
- guide rollers (32) for guiding the unit pipe element.

11. A machine according to any one of claims 1 to 10, further comprising optical means (36) for determining the distance between the frame and the end of the unit pipe element towards which the frame is traveling.

12. A machine according to any one of claims 1 to 11, wherein the frame is polygonal in shape having a plurality of faces on which the winding elements are mounted.

13. A method of laying cables helically on the outside surface of a fluid transport unit pipe element (2) by means of a machine according to any one of claims 1 to 12, the method comprising:
- positioning the rotary frame (14) of the machine around an axis of symmetry (X-X) of the unit pipe element at one of its ends; and
- controlling the linear travel and rotary travel stepper motors (20, 28) of the machine so as to enable the machine to advance linearly towards the opposite end of the unit pipe element with rotation of its rotary frame being synchronized in order to ensure that all of the cables are laid simultaneously and helically on the outside surface of the unit laying element.
